Europäisches Patentamt

European Patent Office

Office européen des brevets

(11) Publication number: **0 229 602**
**B1**

(12) **EUROPEAN PATENT SPECIFICATION**

(45) Date of publication of patent specification: **23.01.91**

(51) Int. Cl.⁵: **G 01 N 21/55,** G 01 N 21/57

(21) Application number: **86850409.3**

(22) Date of filing: **26.11.86**

(54) Reflectometric method of measurement and apparatus for realizing the method.

(30) Priority: **27.11.85 FI 854700**

(43) Date of publication of application:
**22.07.87 Bulletin 87/30**

(45) Publication of the grant of the patent:
**23.01.91 Bulletin 91/04**

(84) Designated Contracting States:
**AT BE CH DE FR GB IT LI NL SE**

(56) References cited:
**AT-B- 351 295**
**DE-A-3 413 838**
**GB-A-2 013 334**

(73) Proprietor: **Heinonen, Aimo**
**Örkkiniityntie 19**
**SF-02970 Espoo (FI)**

(72) Inventor: **Heinonen, Aimo**
**Örkkiniityntie 19**
**SF-02970 Espoo (FI)**

(74) Representative: **Kummelsten, Per-Arne et al**
**UPPSALA PATENTBYRA P.O. Box 9013**
**S-750 09 Uppsala (SE)**

Courier Press, Leamington Spa, England.

EP 0 229 602 B1

## Description

The present invention relates to a reflectometric method of measurement as defined in the introductory section of claim 1. Moreover, the invention relates to a measuring apparatus for reflectometric measurements, as defined in the introductory section of Claim 6.

A particular object of the invention is a reflectometric method of measurement and a corresponding apparatus where the sample to be measured is diffusely illuminated. In the prior art such a method and apparatus are called Elropho (short for Electric Reflectance Photometer). Reflectometric methods of measurement are employed while measuring the whiteness, fluorescence, brightness, transparency, opacity and clarity of the samples, or others such reflectometric otpical properties. An even more specified object of the inventino is a reflectometric method of measurement and apparatus for measuring the ISO (Internation Standard Organisation) whiteness in paper, pulp and paperboard, i.e. in various paper products.

Nowadays paper whiteness is practically everywhere measured almost exclusively by using the two-channel reflectometric measuring apparatus manufactured by Zeiss. The apparatus comprising a ball-like measuring chamber which is white inside and is provided with two channels, i.e. microscopes complete with diaphragms, and a sample aperture and a standard sample aperture, placed respectively in line with the channels, the measuring channel and the reference channel. The light intensities in the channels are detected by means of photometers located in the channels, and the light intensities in the channels are observed by means of a galvanometer, whereto the photometers are connected. The apparatus is calibrated so that the standard sample with a known reflectance value is placed in the reference channel, and the measuring diaphragm of the reference channel is set to correspond to the known reflectance value of the standard sample. Thereafter the diaphragm of the measuring channel is adjusted so that the light intensities are equally strong, i.e. in equilibrium in both channels. The reflectance value of the sample to be measured is defined by placing the sample in the measuring channel and by adjusting the measuring diaphragm in such a position that the two channels are in balance; now the reflectance value of the sample can be read on the scale of the measuring diaphragm. During the measurement of the sample, the diaphragm of the measuring channel is kept in the position adjusted in the calibration measurement.

The above described prior art method and apparatus for reflectometric measurements have, however, proved to be unsatisfactory as the demands for the accuracy of the measurements have grown. Particularly the adjusting of the diaphragm in the measuring channel—whereby the channels are set in balance and the scale of the measuring diaphragm in the reference channel as defined in connection with the calibration—is inaccurate; in other words, the accuracy of the adjustment is dependent on the operator and his personal accuracy. Moreover, the described adjusting of the diaphragm in the measuring channel must be carried out anew for almost every measurement.

Furthermore, the scale of the measuring diaphragm of the reference channel is based on the scale of measurement engraved in the measuring diaphragm while the device has been manufactured, which scale is only set to a desired level during the calibration by aid of a standard sample. Consequently, for instance when the measuring equipment becomes aged, the devaiation between measuring results from separate apparatuses is increased, and the measuring results thus become unreliable.

Moreover, the above described method and apparatus of measurement are based on the presupposition that the reflectance values of the samples are linearly dependent on the position of the measuring diaphragm, i.e. that the scale of the measuring diaphragm is made linear. However, thorough measurements have shown that the reflectance values of different samples do not change in a linear fashion along with the adjusting of the dimming. Consequently, erroneous results in measurements are inherent already in the structure of the method and apparatus of the prior art.

Owing to the above explained and other reasons, the reflectometric methods and apparatuses currently in use have proved out to be largely unsatisfactory. Thus for instance reflectance measurements of paper, carried out both by the manufacturer and the purchaser, have given considerably differing results—in other words, the measuring methods and apparatuses do not render reproducible, comparable results. In practice the lack of reproducible and comparable results in reflectance measurements has for instance lead to situations where paper batches have been returned to the mill, although both the buyer and the dealer have in turn checked that the particular batch fufils the requirements as regards the reflectance measurements.

Other prior art reflectance measuring apparatuses are disclosed in AT—B—351-295 and DE—A—3413838.

The object of the present invention is to eliminate the above mentioned drawbacks. A specific object of the invention is to introduce a reflectrometric method of measurement and a measuring apparatus, rendering reproducible and comparable results which are remarkably more accurate than in the prior art.

Another object of the invention is to introduce a reflectometric method of measurement and a measuring apparatus by aid of which the measurements can be carried out considerably more swiftly and securely than before, so that the accuracy of the operating person affects the final results remarkably less than before.

Yet another object of the invention is to introduce a new reflectometric method of measurement which can be realized mainly by utilizing the prior art Elrepho measuring apparatus currently in general use. Likewise, an object of the invention is to introduce a reflectometric measuring apparatus which can be constructed around a prior art Elrepho apparatus by means of additional components.

Consequently, the overall object of the present invention is to provide a new reflectometric method of measurement which is suited for various different measurements of the reflectometric type and which is essentially more accurate than the prior art methods, and results of which are essentially better reproducible and more reliable than in the prior art, which method can be realized in a simpler and quicker fashion than in the prior art, and which method in operation is not so sensitive to exterior circumstances as the prior art methods.

As for the characteristic features of the invention, reference is made to the appended patent claims.

The invention is based on the basic principle that the measuring channel and the reference channel are set in an exact equilibrium, both during the calibration measurement and the sample measurement, by aid of the measuring diaphragm of the reference channel. In the prior art Elrepho measuring devices, the measuring diaphragm of the reference channel is structurally much more precise than the diaphragm of the measuring channel, which is generally formed of a wedge-like "grey wedge" diaphragm. The present invention makes the calibration measurement essentially more accurate than before. If it is desired that the measuring channel is set in a position corresponding to the light-intensity balance between the two channels, this can of course be carried out in an approximate fashion by aid of the diaphragm of the measuring channel, whereafter the precision adjustments are made by aid of the diaphragm.

The present invention makes it possible that the whole scale of measurement in the reference channel, i.e. the scale of the measuring diaphragm for the sample measurement, and the setting of the measuring scale, are completely defined in connection with the calibration measurements. If desired, a number of separate standard samples can be employed, for instance along the whole scale of the measuring diaphragm, such as near the 0% reflectance, at the 50% reflectance, near the 100% reflectance and, if so desired, at other points of the scale too, in which case the dependence of the reflectance on the scale of the measuring diaphragm can be for example graphically defined for the sample measurements proper.

In a preferred embodiment of the invention, there is employed a control unit which adjusts the position of the diaphragm and the measuring diaphragm automatically, for instance under control of a computer. The central control unit advantageously calculates the reflectance values of the sample on the basis of the measurements carried out under its control.

Furthermore, the employed central control unit can be arranged to control the filters used in the measuring and reference channels so that the measurements can be carried out at a desired wavelength.

Moreover, the central control unit can be arranged to adjust for instance the diaphragm of the measuring channel into a reproducible position which is defined in connection with the calibration measurements and which is to be reproduced in later sample measurements.

The measuring diaphragm of the reference channel and/or the diaphragm of the measuring channel can advantageously be provided with a stepping motor for adjusting the said diaphragms. In that case, when for example a linear stepping precision motor is employed, a motion of the diaphragm corresponding to the whole scale (100%) of the measuring diaphragm, is achieved for instance by means of 10000 control impulses. Thus each impulse, i.e. the smallest adjustable interval in the scale, corresponds to a reflectance of 0,01%. The same rule can be applied both in the reference and the measuring channels.

By using the method and apparatus of the invention, the accuracy gained in perforamance tests has increased up to 0,001% when computerized control and a stepping impulse motor have been employed for adjusting the diaphragms of the reference channel and the measuring channel. The accuracy gain by using the prior art methods has been at best a questionable 0,3%. By aid of the method and apparatus of the invention the choice of filters, adjustments, the calibration of the scale and the sample measurement proper can all be carried out in an essentially shorter time, which is for example 1/10 of the time required for measurements with prior art equipment.

In the following the invention is explained in more detail in the light of a preferred embodiment and with reference to the appended drawings, where

Figure 1 illustrates a preferred embodiment of the measuring apparatus of the invention and

Figure 2 is a block diagram illustrating the realization of an application of the method of the invention,

Figure 3 illustrates the interdependence of the reflectance value and the linear scale in one measurement, and

Figure 4 shows the results from the measurements carried out by means of the method of the present invention as compared to those obtained from the measurements by means of the known Elrepho apparatus.

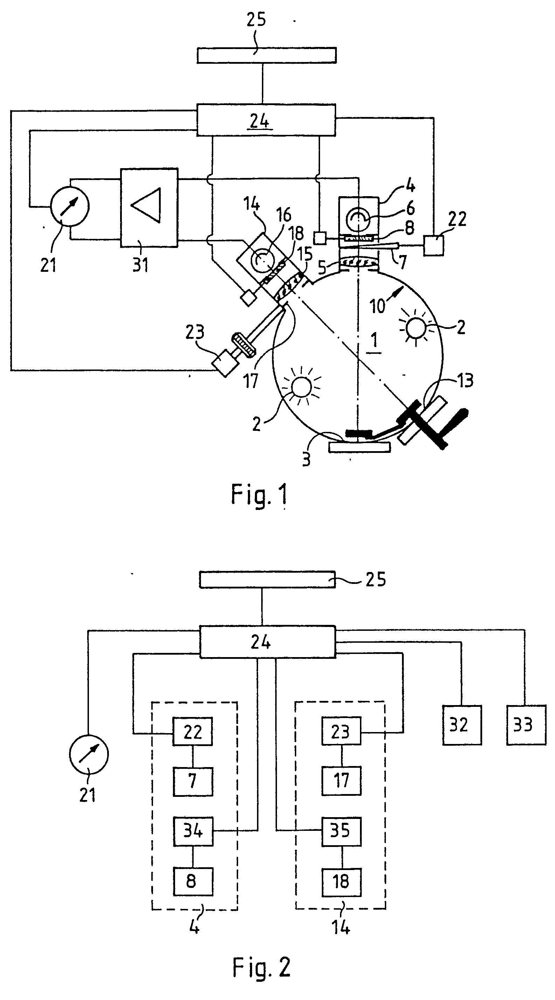

Figure 1 illustrates the measuring apparatus of the invention designed for reflectometric measurements. The apparatus comprises a ball-shaped measuring chamber 1, which in this preferred embodiment is provided with two light sources 2, a sample aperture 3, and—in this embodiment—also a sample aperture 13 for the standard sample. The inner surface 10 of the measuring chamber 1 is white so that the samples located in the sample aperture and standard sample aperture are diffusely illuminated.

Moreover, the apparatus comprises a measuring channel 4 and a reference measuring channel 14, both provided with optics 5 and 15 respectively, in order to direct the light reflected from the sample to be measured and the standard sample to the respective photometers 6 and 16 pertaining to the corresponding measuring channel and reference channel. Furthermore, the measuring channel 4 and the reference channel 14 are furnished with a diaphragm 7 and a measuring diaphragm 17 respectively, in order to dim the light directed to the photometers 6 and 16 respectively, and possibly with filters 8 and 18 respectively in order to filter the light directed to the photometer. In addition to this, the apparatus comprises a reference measuring device 21 which is arranged to compare the voltages created by the light in the photometers and to indicate the balance between the light intensities in the channels. The reference measuring device 21 comprises an amplifier 31 for improving the reference accuracy.

According to the invention, the diaphragm 7 of the measuring channel and the measuring diaphragm 17 of the reference channel are provided with electric motors 22 and 23 respectively in order to adjust the diaphragms. Furthermore, the measuring apparatus comprises a registering and calculating control unit 24. The control unit is arranged to adjust, during the calibration measurement, the diaphragm 7 of the measuring channel 4 into a random reproducible position, and the measuring diaphragm 17 of the reference channel 14 to a position indicated by the reference measuring device 21, which position conforms to the balance of the light intensities in the channels while the standard sample is placed in the reference channel, for example in the reference sample aperture 13. Moreover, the control unit 24 is arranged to adjust, during the sample measurement, the measuring diaphragm 17 of the reference channel 14 similarly to a position conforming to the balance of the light intensities in the channels while the sample to be measured is placed in the measuring channel, i.e. in the sample aperture 3. Further, the registering and calculating control unit 24 is arranged to register the readings of the diaphragms 7 and 17 of the measuring channel 4 and reference channel 14 respectively in connection with the calibration and sample measurements as well as to calculate the reflectance value of the measured sample by aid of the reading of the measuring diaphragm of the reference channel, obtained in the sample measurement, from the reflectance value of the standard value of the standards sample on the basis of the reading of the measuring diaphragm determined in the calibration measurement. The control unit 24 is suitably arranged to perform the standard measurement automatically according to orders from the keyboard 25. Moreover, the control unit 24 is arranged to register the readings of the diaphragm 7 of the measuring channel 4 in accordance with the calibration measurement of the standard sample in use at any given occasion, and respectively to adjust the measuring diaphragm 17 of the reference channel 14 to a respective position, i.a. to a position corresponding to the measurement of the standard sample in question. Now the calibration of the apparatus can be carried out mainly instantaneously under the control of the control unit 24. The essential point is the use of adjusting devices for the diaphragms, by aid of which devices the diaphragms can be reproducibly adjusted to a certain position, registered for instance in connection with the calibration or otherwise.

In addition to this, the apparatus may comprise filters for the measuring channel 4 and the reference channel 14; only an identical pair of filters, 8 and 18 respectively, is illustrated in the drawing. The control unit is arranged to shift the filters, by aid of the actuators, into the measuring and reference channels respectively, in accordance with the respective filters employed in the calibration. Thus the apparatus may be provided with a large number of different filters, which the control unit 24 is programmed to guide and adjust into place.

The adjusting motor 23 of the measuring diaphragm of the reference channel 14 is suitably formed of stepping impulse motors of a conventional type, which motors are controlled by aid of control impulses. The whole scale of measurement of the reflectometric measuring apparatus, i.e. 100%, may correspond for instance to 1000, 5000, 10000, 20000, 50000 or even 100000 impulses. In that case, the accuracy obtained at the given interval is between 1/10—1/1000%. Likewise, the adjusting motor 22 of the diaphragm 7 of the measuring channel 4 may be formed of a respective stepping impulse motor.

While employing the reflectrometric method of measurement and the corresponding apparatus, the first stage in the procedure is to define the measuring scale by aid of one or several calibration measurements. In the calibration measurement, the measuring channels are first closed so that they are completely impermeable to light, for instance by means of a closing plate (not illustrated in the drawing). Simultaneously, the 0-value of the reference measuring device 21 is defined according to the equilibrium of the light intensities in the channels. Then the diaphragms 7, 17 of the channels 4, 14 are opened, whereafter the measuring diaphragm 17 of the reference channel 14 is set into a random position, for instance to an estimated position near the known reflectance value of the standard sample. Thereafter the diaphragm 7 of the measuring channel 4 is closed to such an extent that the channels are approximately in balance i.e. that the light intensities in the channels are equal; the position of the diaphragm is registered in the central control unit. Then the measuring diaphragm 17 is adjusted to a position exactly corresponding to the balance of the light intensities in the channels, i.e. to a position where the reference measuring device 21 assumes the 0-value defined at the beginning; the position of the measuring diaphragm is registered in the central control unit. The determined set value conforming to the position of the measuring diaphragm now corresponds to the known reflectance value of the standard sample.

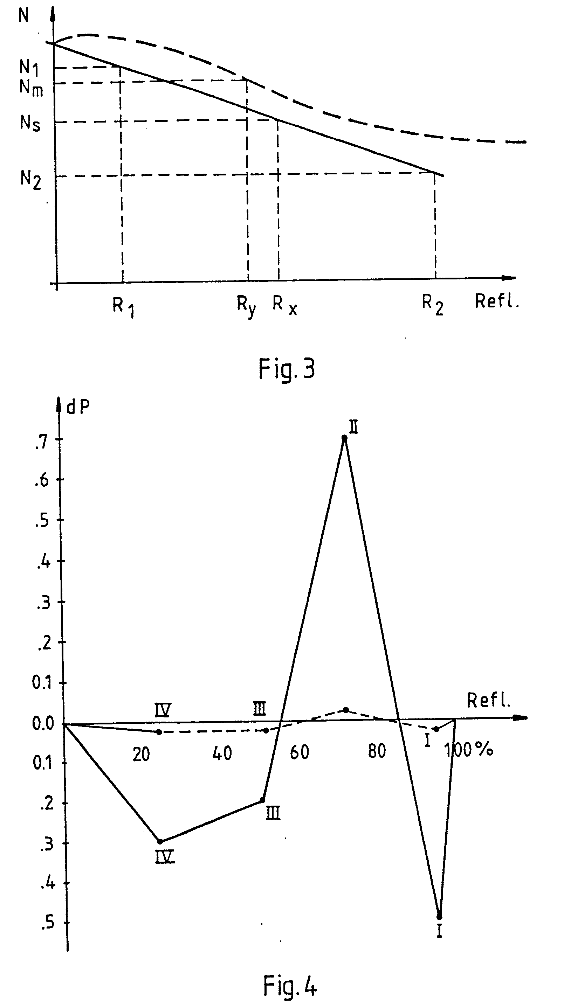

In a similar fashion, several standard measurements can be carried out with different standards, for instance with reflectance values between 0—100%. During these measurements, the diaphragm 7 of the measuring channel 4 is suitably maintained in the same position throughout, so that the dependence of the reflectance value on the position of the measuring diaphragm is determined for instance in the form of a graph as is illustrated in Figure 3 as a result of a series of measurements. Thereafter the sample measurement can be carried out quickly and easily by adjusting the diaphragm of the measuring channel to a position used in the calibration measurement and by determining the set values of the measuring diaphragm of the reference channel in equilibrium, according to what was said above. Now the reflectance values of the samples can be calculated on the basis of the calibration measurements.

If it is desired to examine the reflectance values of the samples at a certain wavelength, the central control unit 24 is directed to shift the desired and identical filters to both channels, for instance the filters 8 and 18, into the measuring channel and the reference channel respectively, as is illustrated in Figure 1. The calibration measurements and the sample measurements are thereafter carried out by aid of filters for instance according to what is described above.

Figure 2 shows a block diagram of the apparatus of the invention. Topmost is the keyboard 25 whereby the registering and calculating control unit, i.e. the computer, is controlled. The control unit 24 is arranged to control the actuator 22 of the diaphragm 7 of the measuring channel 4, and similarly the actuator 23 of the diaphragm 17 of the reference channel 14. Furthermore, the control unit controls the actuators 34 and 35 of the filters 8 and 18 respectively, which shift the identical filters to each channel. Moreover, the control unit receives the measuring signals sent by the reference measuring device 21, on the basis of which signals the adjusting diaphragm 17 of the reference channel 4 is controlled. In addition to this, in the described embodiment the control unit 24 controls the actuator 32 of the calibration samples, i.e. standard samples, and the shifting device 33 of the samples to be measured, so that it shifts the controlled standard samples and the samples to be measured respectively to the apertures 13 and 3 of the measuring chamber 1.

Figure 4 is a graphic illustration of the measuring results from four measurements, where the measurements were carried out by means of an ordinary Elrepho apparatus (continuous line) and on the other hand by means of the apparatus of the invention as illustrated in Figure 1 (dotted line) from samples with a known reflectance value. In both cases the calibration measurements were carried out as described above, and by employing the same known samples. From the measuring results it is apparent that the greatest error dP with the conventional method was 0,7% and with the method of the invention about 0,03%.

In the preferred embodiments, the employed actuators of the diaphragms 7 and 17 of the measuring channel 4 and the reference channel 14 respectively are stepping impulse motors. Instead of these, however, there can be used any type of precision motor such as a servomotor etc.

The reflectance value of the sample is determined from the measuring results for instance as is illustrated in Figure 3 (continuous line), in case the reflectance value is or it is supposed to be linearly dependent on the set value N of the diaphragm of the reference channel. From Figure 3 (continuous line) we obtain

$$R_x = R_1 + (N_s - N_1)\frac{R_1 - R_2}{N_1 - N_2}$$

where $R_x$ is the reflectance value to be defined, $R_1$ and $R_2$ are reflectance values of the standard samples employed in the calibration measurements and $N_m$, $N_1$ and $N_2$ are set values of the reference channel obtained in the sample measurement and the calibration measurement respectively.

If the reflectance value is dependent on the set value of the diaphragm of the reference channel in a non-linear fashion (dotted line), the reflectance value $R_y$ to be defined can be determined graphically as is illustrated in Figure 3 on the basis of the measured set value $N_m$ of the diaphragm of the reference channel.

The specified preferred embodiments of the method and apparatus of the invention are represented only as practical illustrations of the invention, and the modifications of the invention may be varied within the scope of the appended patent Claims.

The measuring chamber may be, instead of ball-shaped, e.g. half ball-shaped or have another form.

The measuring chamber may have one or two or more light sources and it may emit light continuously or pulsed.

The filter of the measuring chamber may be a usual optic filter or e.g. a monochromator provided with for example a gate or a prism.

**Claims**

1. A method of measuring the reflectrometric properties of a sample by employing a 2-channel reflectometer having a measuring channel (4) and a reference channel (14), characterized by comprising the steps of

a) calibrating the reflectometer by placing the standard sample in the standard sample aperture (3),

b) setting the diaphragm (7) of the measuring channel (4) in a random position, and

c) adjusting the light intensities detected in the measuring channel (4) and in the reference channel (14) into balance by setting the dimming in the reference channel (14) by aid of the diaphragm (17) of the reference channel (14), and

d) measuring the sample to be measured by placing the sample in the sample aperture (3),

e) adjusting the intensities detected in the measuring channel (4) and the reference channel (14) into balance by aid of the diaphragm (17) of the reference channel (17), and

f) determining the reflectance value of the sample, by aid of the defined value of the diaphragm (17) of the reference channel (14), from the reflectance value of the standard sample on the basis of the value of the diaphragm (17) of the reference channel (14) determined in the calibration measurement.

2. The method of Claim 1, characterized in that, in connection with the calibration, there is defined the interdependence between the measuring scale of the diaphragm (17) of the reference channel (14) and the reflectance to be measured in the measuring channel (4) under measuring conditions, by means of defining the values of the diaphragm (17) of the reference channel (14) by aid of at least two and advantageously more standard samples while the diaphragm (7) of the measuring channel (4) is kept in the same position.

3. The method of Claim 1 or 2, characterized in that the measuring channel (4) and the reference channel (14) are set, in connection with the calibration, into an approximate balance by adjusting the diaphragm (7) of the measuring channel (4).

4. The method of any one of Claims 1—3, where the light intensities in the measuring channel (4) and the reference channel (14) are detected by means of photometers (6, 16) and the light intensities in the measuring channel (4) and the reference channel (14) are compared, by comparing the voltages created by the light in the photometers (6, 16), by aid of a reference measuring device (21), characterized in that the 0-value of the reference measuring device (21), corresponding to the balance of the light intensities, is defined as a dark voltage value by giving both channels a light-proof covering.

5. The method of any one of Claims 1—4, characterized in that the measurements are controlled by employing a registering and calculating control unit (24), that the set values of the diaphragms of the measuring channel (4) and the reference channel (14), obtained in the calibration, are registered, as well as the channel filters (8, 18) possibly in use, that the diaphragm (7) of the measuring channel (4) and the possible filters are in each sample measurement directed to the position defined and registered in an earlier, respective calibration measurement by aid of the control unit (24), and that the reference value of the sample to be measured is calculated by aid of the control unit (24) and on the basis of the registered calibration measurements.

6. An apparatus for reflectometric measurements, comprising a measuring chamber (1) provided with at least a light source (2) and a sample aperture (3) so that the sample placed in the sample aperture is diffusely illuminated; a measuring channel (4) provided with optics (5) for guiding the light reflected from the sample under measurement to the photometer (6) belonging to the measuring channel, with a diaphragm (7) for dimming the light directed into the photometer, and with a possible filter (8) for filtering the light directed into the photometer; a reference channel (14) provided with optics (15) for guiding the light from the measuring chamber into the photometer (16) belonging to the reference channel (14), with a diaphragm (17) for dimming the light directed into the photometer, and with a possible filter (18) for filtering the light directed into the photometer; a reference measuring device (21) which is arranged to compare the voltages created by the light in the photometers and to indicate the balance between the light intensities in the channels, characterized in that the diaphragm (7) of the measuring channel (4) and the diaphragm (17) of the reference channel (14) are provided with adjusting motors (22, 23); that the measuring apparatus includes a registering and calculating control unit (24); and that the control unit is arranged, in the calibration measurement, to set the diaphragm (7) of the measuring channel (4) into a random reproducible position and the diaphragm (17) of the reference channel (14) into a position corresponding to the balance between the light intensities of the two channels, this position being indicated by the reference measuring device (21), while the standard sample is placed in the standard sample aperture (13), and in the sample measurement to likewise adjust the diaphragm (17) of the reference channel (14) to a position corresponding to the balance of the light intensities in the two channels, this position being indicated by the reference measuring device (21), while the sample to be measured is placed in the sample aperture (3), and to register the set values of the diaphragms in connection with the calibration and sample measurements and to determine the reflectance value of the sample to be measured from the reflectance value of the standard sample, on the basis of the set value of the diaphragm (17) determined in the calibration measurement, by aid of the value of the diaphragm (17) of the reference channel (14) obtained in the sample measurement.

7. The apparatus of Claim 6, characterized in that the control unit (24) is arranged to adjust the diaphragm (7) of the measuring channel (4) into a position employed in the calibration measurement of the standard sample currently in use.

8. The apparatus of Claim 6 or 7, characterized in that the apparatus comprises filters (8, 18) for the measuring channel (4) and the reference channel (14), and that the control unit (24) is arranged to shift the filters into the measuring channel (4) and reference channel (14) respectively, in accordance with the filters employed during the respective calibration.

9. The apparatus of any one of Claims 6—8, characterized in that the adjusting motor (23) of the diaphragm (17) of the reference channel (14) is a stepping motor.

10. The apparatus of any one of Claims 6—9, characterized in that the adjusting motor (22) of the diaphragm (7) of the measuring channel (4) is a stepping motor.

11. The apparatus of any one of Claims 6—8, characterized in that the adjusting motor (23) of the diaphragm (17) of the reference channel (14) is a servomotor.

12. The apparatus of any one of Claims 6—8 or 11, characterized in that the adjusting motor (22) of the diaphragm (7) of the measuring channel (4) is a servomotor.

## Patentansprüche

1. Verfahren zur Messung der Rückstrahleigenschaften einer Probe durch Verwendung eines 2-Kanal-Reflektometers, mit einem Meßkanal (4) und einem Referenz-Kanal (14), dadurch gekennzeichnet, daß folgende Schritte ausgeführt werden:

a) Eichung des Reflektometers durch Plazierung einer Standardprobe in eine Öffnung (3) für eine Standardprobe,

b) Einstellung der Blende (7) des Meßkanals (4) in eine Zufallsposition, und

c) Einstellung der Lichtintensitäten, die im Meßkanal (4) und im Referenz-Kanal (14) erfaßt werden, in Gleichgewicht durch Einstellung der Dämpfung bzw. Abblendung im Referenz-Kanal (14) mittels der Blende (17) des Referenz-Kanals (14), und

d) Durchführung der Messung der zu messenden Probe durch Einsetzen der Probe in die Probenöffnung (3),

e) Abgleichen der im Meßkanal (4) und im Referenz-Kanal (14) erfaßten Intensitäten mittels der Blende (17) des Referenz-Kanals (14), und

f) Bestimmung de Reflexionswertes der Probe mittels des definierten Wertes der Blende (17) des Referenz-Kanals (14) aus dem Reflexionswert der Standardprobe auf der Grundlange des Wertes der Blende (17) des Referenz-Kanals (14), der in Eichmessungen festgelegt wurde.

2. Verfahren nach Anspruch 1, dadurch gekennzeichnet, daß in Verbindung mit der Eichung die Korrelation zwischen der Meßskala der Blende (17) des Referenz-Kanals (14) und dem zu messenden Reflexionsvermögen im Meßkanal (4) unter Meßbedingungen durch Definition der Werte der Blende (17) des Referenz-Kanals (14) mittels wenigstens zweier und vorteilhafterweise mehr als zweier Standard-Proben definiert wird, während die Blende (17) des Meßkanals (4) in der gleichen Position gehalten wird.

3. Verfahren nach Anspruch 1 oder 2, dadurch gekennzeichnet, daß der Meßkanal (4) und der Referenz-Kanal (14) in Verbindung mit der Eichung in angemessenem Gleichgewicht bzw. in angemessenem Abgleich durch Einstellung der Blende (7) des Meßkanals (4) eingestellt werden.

4. Verfahren nach einem der Ansprüche 1 bis 3, bei dem die Lichtintensitäten im Meßkanal (4) und Referenz-Kanal (14) durch Fotometer (6, 16) erfaßt und die Lichtintensitäten im Meßkanal (4) und im Referenz-Kanal (14) dadurch miteinander verglichen werden, daß die durch das Licht in den Fotormetern (6, 16) erzeugten Spannungen mittels einer Referenz-Meß-Einrichtung (21) verglichen werden, dadurch gekennzeichnet, daß der 0-Wert der Referenz-Meß-Einrichtung (21), der dem Gleichgewicht der Lichtintensitäten entspricht, als Dunkel-Spannungswert dadurch definiert wird, daß beiden Kanälen eine lichtundurchlässige Abdeckung verliehen wird.

5. Verfahren nach einem der Ansprüche 1 bis 4, dadurch gekennzeichnet, daß die Messungen durch Verwendungen einer Registrier- und Rechensteuereinheit (24) gesteuert werden, daß die Sollwerte der Blenden des Meßkanals (4) und des Referenz-Kanals (14), die während der Eichung erhalten werden, registriert bzw. gespeichert werden, wie auch der gegebenenfalls verwendeten Kanal-Filter (8, 18), daß die Blende (7) des Meßkanals (4) und die gegebenenfalls vorhandenen Filter bei jeder Proben-Messung auf diejenige Position mittels der Steuereinheit (24) gerichtet werden, die in einer früheren bzw. Eichmessung definiert und registriert wurde, und daß der Reflexionswert der zu messenden Probe mittels der Steuereinheit (24) und auf der Grundlage der registrierten Eichmessungen berechnet wird.

6. Vorrichtung zur Ausführung von Rückstrahlungsmessungen, mit einer Meßkammer (1), die wenigstens eine Lichtquelle (2) und eine Proben-Öffnung (3) aufweist, so daß die in die Proben-Öffnung eingesetzte Probe diffus beleuchtet wird, mit einem Meßkanal (4), der mit optischen Einrichtungen (5) zur Führung des von der Probe während der Messung reflektierten Lichtes zum Fotometer (6) versehen ist, welches dem Meßkanal zugeordnet ist, mit einer Blende (7) zum Ablenden bzw. Dämpfen des auf das Fotometer gerichteten Lichts, und gegebenenfalls mit einem Filter (8) zum Filtern des auf das Fotometer gerichteten Lichts, mit einem Referenz-Kanal (14), der mit einer optischen Einrichtung (15) zur Führung des Lichts von der Meßkammer in das Fotometer (16) versehen ist, welche dem Referenz-Kanal (14) zugeordnet ist, mit einer Blende (17) zum Abblenden bzw. Dämpfen des auf das Fotometer gerichteten Lichts, und gegebenenfalls mit einem Filter (18) zum Filtern des Lichtes, das auf das Fotometer gerichtet ist, mit einer Referenz-Meß-Einrichtung (21), die zum Vergleich derjenigen Spannungen angeordnet ist, die durch das Licht in den Fotometern erzeugt werden und die das Gleichgewicht bzw. die Balance zwischen den Licthintensitäten in den Kanälen anzeigt, dadurch gekennzeichnet, daß die Blende (7) des Meßkanals (4) und die Blende (17) des Referenz-Kanals (14) mit Stell-Motoren (22, 23) versehen sind, daß die Meß-Einrichtung eine Registrier- bzw. Speicher und Rechensteuereinheit (24) aufweist, daß die Steuereinheit während der Eichmessung vorgesehen ist, um die Blende (7) des Meßkanals (4) in eine zufällige reproduzierbare Position und die Blende (17) des Referenz-Kanals (14) in eine Position einzustellen, die dem Gleichgewicht zwischen den Lichtintensitäten der beiden Kanäle entspricht, wobei diese Position durch die Referenz-Meß-Einrichtung (21) angezeigt wird, während die Standard-Probe in die Öffnung (13) für die Standard-Probe eingesetzt ist, während bei der Probenmessung in ähnlicher Weise die Blende (17) des Referenz-Kanals (14) in eine Position gestellt wird, die dem Gleichgewicht der Lichtintensitäten der beiden Kanäle entspricht, wobei diese Position durch die Referenz-Meß-Einrichtung (21) angezeigt wird, während die zu messende bzw. auszumessende Probe in die Öffnung (3) eingesetzt ist, und um die Sollwerte der Blenden in Verbindung mit den Eich- und Proben-Messungen zu registrieren und den Reflexionswert der zu messenden Probe aus dem Reflexionswert der Standard-Probe auf der Basis des Sollwertes der Blende (17), welcher durch die Eichmessung festgelegt wurde, mittels des Wertes der Blende (17) des Referenz-Kanals (14), der in der Proben-Messung erhalten wurde, zu bestimmen.

7. Vorrichtung nach Anspruch 6, dadurch gekennzeichnet, daß die Steuereinheit (24) vorgesehen ist, um die Blende (7) des Meßkanals (4) in eine Position einzustellen, die bei der Eichmessung der gegenwärtig verwendeten Standard-Probe benutzt wird.

8. Vorrichtung nach Anspruch 6 oder 7, dadurch gekennzeichnet, daß die Vorrichtung Filter (8, 18) für den Meßkanal (4) und den Referenz-Kanal (14) aufweist, und daß die Steuereinheit (24) vorgesehen ist, um die Filter in den Meßkanal (4) bzw. Referenz-Kanal (14) in Übereinstimmung mit denjenigen Filtern zu verschieben, die während der jeweiligen Eichung benutzt wurden.

9. Vorrichtung nach einem der Ansprüche 6 bis 8, dadurch gekennzeichnet, daß ein Stellmotor (23) für die Blende (17) des Referenz-Kanals (14) durch einen Schrittmotor gebildet ist.

10. Vorrichtung nach einem der Ansprüche 6 bis 9, dadurch gekennzeichnet, daß der Stellmotor (22) für die Blende (7) des Meßkanals (4) ein Schrittmotor ist.

11. Vorrichtung nach einem der Ansprüche 6 bis 8, dadurch gekennzeichnet, daß der Stellmotor (23) für die Blende (17) des Referenz-Kanals (14) ein Servomotor ist.

12. Vorrichtung nach einem der Ansprüche 6 bis 8 oder 11, dadurch gekennzeichnet, daß der Stellmotor (22) für die Blende (7) des Meßkanals (4) ein Servomotor ist.

**Revendications**

1. Procédé de mesure des propriétés de réflexion d'un échantillon en employant un réfléctomètre à deux canaux comprenant un canal de mesure (4) et un canal de référence (14), caractérisé en ce qu'il comprend les opérations suivantes:

a) étalonnage du réfléctomètre en plaçant l'échantillon témoin dans la fenêtre pour échantillon témoin (3),

b) le réglage du diaphragme (7) du canal de mesure (4) d'une manière quelconque, et

c) l'ajustement des intensités lumineuses détectées sur le canal de mesure (4) et sur le canal de référence (14) en lss équilibrant au moyen du réglage de l'aténuateur du canal de référence (14), à l'aide du diaphragme (17) du canal de référence (14), et

d) la mesure de l'échantillon à mesurer en le plaçant dans la fenêtre à échantillon (3),

e) l'ajustement des intensités détectées sur le canal de mesure (4) et le canal de référence (14) pour les amener en équilibre au moyen du diaphragme (17) du canal de référence (17), et

f) la détermination de la valeur du coefficient de réflexion de l'échantillon au moyen de la valuer définie du diaphragme (17) du canal de référence (14), à partir de la valeur du coefficient de réflexion de l'échantillon témoin en utilisant la valeur du diaphragme (17) du canal de référence (14) déterminé au cours de la mesure d'étalonnage.

2. Procédé selon la revendication 1, caractérisé en ce que, au moment de l'étalonnage, il est défini une relation entre l'échelle de mesure du diaphragme (17) du canal de référence (14) et le coefficient de réflexion à mesurer sur le canal de mesure (4) dans les conditions de la mesure, au moyen de la définition des valeurs du diaphragme (17) du canal de référence (14) au moyen de deux au moins et de préférence davantage d'échantillons témoins tandis que le diaphragme (7) du canal de mesure (4) est maintenu dans la même position.

3. Procédé selon l'une des revendications 1 ou 2, caractérisé en ce que le canal de mesure (4) et le canal de référence (14) sont réglés, au moment de l'étalonnage, sensiblement en équilibré en ajustant le diaphragme (7) du canal de mesure (4).

4. Procédé selon l'une quelconque des revendications 1 à 3, dans lequel les intensités lumineuses du canal de mesure (4) et du canal de référence (14) sont détectées au moyen de photomètres (6, 16) et les intensités lumineuses du canal de mesure (4) et du canal de référence (14) sont comparées en faisant une comparaison entre les tensions créées par la lumière dans les photomètres (6, 16) à l'aide d'un dispositif de mesure de référence (21), caractérisé en ce que la valeur du zéro du dispositif de mesure de référence (21) correspondant à l'équilibre des intensités lumineuses est défini comme valeur de la tension d'obscurité en plaçant sur les deux canaux un capôt étanche à la lumière.

5. Procédé selon l'une quelconque des revendications 1 à 4, caractérisé en ce que les mesures sont commandées au moyen d'une unité de commande d'enregistrement et de calcul (24) en ce que les valeurs définies du diaphragme du canal de mesure (4) et du canal de référence (14) obtenues au cours de l'étalonnage, sont enregistrées, de même que les filtres des canaux (8, 18) éventuellement utilisés, en ce que le diaphragme (7) du canal de mesure (4) et les éventuels filtres sont placés directement au cours de la mesure de chaque échantillon dans la position définie et enregistrée précédemment, au cours d'une mesure d'étalonnage correspondante au moyen de l'unité de commande (24), et en ce que la valeur du coefficient de réflexion de l'échantillon à mesurer est calculée à l'aide de l'unité de commande (24) et à partir des mesures d'étalonnage enregistrées.

6. Appareil pour des mesures par réflectométrie, comprenant une chambre de mesure (1) équipée d'au moins une source lumineuse (2) et d'une fenêtre à échantillon (3) de manière que l'échantillon placé dans la fenêtre à échantillon soit éclairé en lumière diffuse; un canal de mesure (4) équipé d'une optique (5) pour guider la lumière réfléchie sous l'échantillon en cours de mesure vers le photomètre (6) correspondant au canal de mesure, avec un diaphragme (7) pour atténuer la lumière orientée vers le photomètre, et avec un filtre éventuel (8) pour filtrer la lumière orientée vers le photomètre; un canal de référence (14) équipé d'une optique (15) pour guider la lumière de la chambre de mesure vers le photomètre (16) affecté au canal de référence (14), avec un diaphragme (17) pour atténuer la lumière orientée vers le photomètre, et avec un filtre éventuel (18) pour filtrer la lumière orientée vers le photomètre; un dispositif de mesure de référence (21) qui est agencé pour comparer les tensions créées par la lumière dans les photomètres et pour indiquer l'équilibre entre les intensités lumineuses des canaux, caractérisé en ce que diaphragme (7) du canal de mesure (4) et le diaphragme (17) du canal de référence (14) sont équipés de moteurs de réglage (22, 23); en ce que l'appareil de mesurer comporte une unité de commande d'enregistrement et de calcul (24); et en ce que l'unité de commande est agencée, au cours de la mesure d'étalonnage, pour régler le diaphragme (7) du canal de mesure (4) dans une position aléatoire productible et le diaphragme (17) du canal de référence (14) en une position correspondant à l'équilibre entre les intensité lumineuses des deux canaux, cette position étant indiquée par le dispositif de mesure de référence (21), tandis que l'échantillon témoin est placé dans la fenêtre à échantillon témoin (13); et au cours de la mesure de l'échantillon afin d'ajuster de la même manière le diaphragme (17) du canal de référence (14) en une position correspondant à l'équilibre des intensités lumineuses sur les deux canaux, cette position étant indiquée par le dispositif de mesure de référence (21), pendant que l'échantillon à mesurer est placé dans la fenêtre à échantillon (3), et pour enregistrer le jeu des valeurs des diaphragmes en liaison avec la mesure d'étalonnage et la mesure de l'échantillon, et pour déterminer le valeur du coefficient de réflexion de l'échantillon à mesurer à partir de la valeur du coefficient de réflexion de l'échantillon témoin, d'après la valeur déterminée du diaphragme (17) au cours de la mesure d'étalonnage, à l'aide de la valeur du diaphragme (17) du canal de référence (14) obtenue au cours de la mesure de l'échantillon.

7. Appareil selon la revendication 6, caractérisé en ce que l'unité de commande (24) est agencée pour ajuster le diaphragme (7) du canal de mesure (4) dans une position employée au cours de la mesure d'étalonnage de l'échantillon témoin actuellement employée.

8. Appareil selon l'une des revendications 6 ou 7, caractérisé en ce que l'appareil comporte des filtres (8, 18) pour le canal de mesure (4) et le canal de référence (14), et en ce que l'unité de commande (24) est agencée pour placer les filtres sur le canal de mesure (4) et sur le canal de référence (14) respectivement, en fonction des filtres employés au cours de l'étalonnage correspondant.

9. Appareil selon l'une quelconque des revendications 6 à 8, caractérisé en ce que le moteur de réglage (23) du diaphragme (17) du canal de référence (14) est un moteur pas à pas.

10. Appareil selon l'une quelconque des revendications 6 à 9, caractérisé en ce que le moteur de réglage (22) du diaphragme (7) du canal de mesure (4) est un moteur pas à pas.

11. Appareil selon l'une quelconque des revendications 6 à 8, caractérisé en ce que le moteur de réglage (23) du diaphragme (17) du canal de référence (14) est un servo-moteur.

12. Appareil selon l'une quelconque des revendications 6 à 8 ou 11, caractérisé en ce que le moteur de réglage (22) du diaphragme (7) du canal de mesure (4) est un servo-moteur.

Fig. 1

Fig. 2

EP 0 229 602 B1

Fig. 3

Fig. 4